# EUROPEAN PATENT APPLICATION

(11) **EP 1 217 800 A1**
(43) Date of publication of application: **26.06.2002**
(21) Application number: 01000773.0
(22) Date of filing: 19.12.2001
(51) Int. Cl.: H04L 29/06

(54) **Method and system for network protocol processing**

(30) Priority: 19.12.2000 US 741452
(71) Applicant: Texas Instruments Incorporated, Dallas, Texas 75251 (US)
(72) Inventor: ING-SIMMONS, Nicholas K., Huntingdon, Cambridgeshire PE28 4JS (GB)
(74) Representative: Holt, Michael

(57) **Abstract**

A method and system for network data processing is presented. The method and system involve receiving a data set (70) and determining a modification to perform on the data set. The method and system further involve determining an offset (62) into memory (66) to store the data set based on the modification. The memory has an associated start address (68). The method and system also involve storing the data set in the memory at the offset and modifying the data set.

## Description

### TECHNICAL FIELD OF THE INVENTION

This invention relates in general to data processing, and, more specifically, to a method and system for network protocol processing.

### BACKGROUND OF THE INVENTION

As computers have grown increasingly important in today's society, the use of networks to interconnect computers has also increased. As networks have been increasingly used, the speed of the networks and the amount of data transferred over the networks has also increased. The increase in the amount of data and the speed of networks has lead to a decrease in the amount of time that network interfaces and other network equipment have to process received packets.

### SUMMARY OF THE INVENTION

The present invention provides an improved method and system for network protocol processing. In accordance with an embodiment, the present invention provides a method and system for network data processing that includes receiving a data set and determining a modification to perform on the data set. An offset into memory is determined to store the data set based on the modification. The memory has an associated start address. The data set is stored in the memory at the offset and modified.

The present invention provides the capability to decrease the number of memory transfers when processing network data. More specifically, by storing data to be modified at a location offset into a memory buffer, headers and other information may be prepended to the data. Prepending the header directly to the data in the same buffer avoids the overhead of storing the data in a first buffer and the header in a second buffer and then copying the data from the first buffer to the second buffer. Decreased memory transfers allows for increased speed of operation at the device.

### BRIEF DESCRIPTION OF THE DRAWINGS

For a more complete understanding of the present invention, reference is now made to the following detailed description of certain particular and illustrative embodiments and the features and aspects thereof, by way of example only, and with reference to the figures of the accompanying drawings in which:
FIGURE 1 is a block diagram illustrating a computer system coupled to one or more networks through a network interface in accordance with an embodiment of the present invention; and
FIGURE 2 is a block diagram illustrating details of memory associated with the network interface in accordance with an embodiment of the present invention.

### DETAILED DESCRIPTION OF THE INVENTION

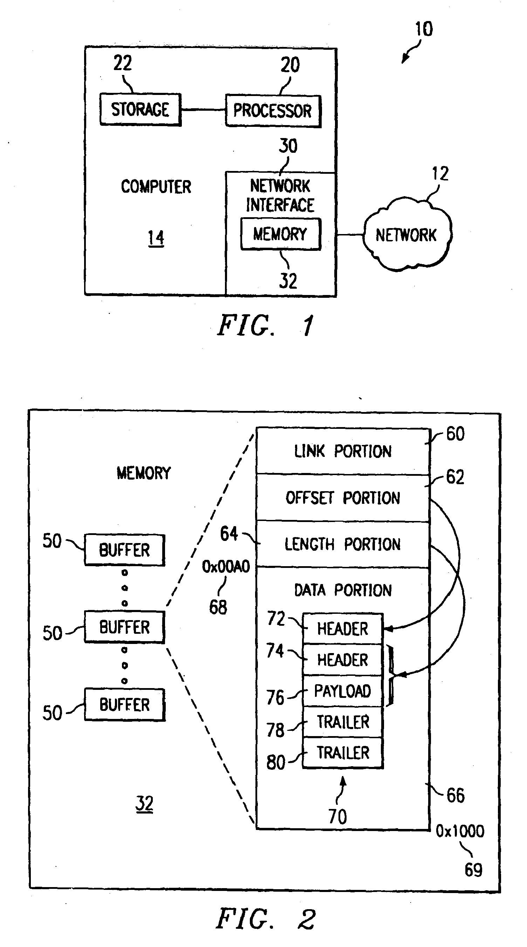

FIGURE 1 is a block diagram illustrating a network connected computer system 10. System 10 comprises a network 12 and a computer 14.

Network 12 comprises any suitable data transport network, such as a Transmission Control Protocol/Internet Protocol (TCP/IP) network, an asynchronous transfer mode (ATM) network, an Ethernet network, a synchronous optical network (SONET) or a fiber distributed data interchange (FDDI). In general, network 12 may comprise any suitable packet switched and/or circuit switched networks in any combination. Network 12 may represent multiple networks coupled to computer 14.

Computer system 14 comprises a general purpose or specialized computer system operable to receive data from network 12. More specifically, computer 14 comprises a processor 20, storage 22, a network interface 30, and associated memory 32. Processor 20 comprises any suitable general purpose or specialized processor operable to execute logic and applications on storage 22. For example, processor 20 may comprise a field programmable gate array (FPGA), an application specific integrated circuit (ASIC), a general purpose central processing unit (CPU), or other suitable electronic or optical processing devices. Processor 20 may represent multiple processors.

Storage 22 comprises any suitable electronic, optical and magnetic storage in any combination. Storage 22 may involve persistent storage and transient storage. For example, storage 22 may comprise a magnetic hard disk, an optical storage device, electronic random access memory (RAM) or static RAM (SRAM). Storage 22 operates to store logic, applications and other instructions for execution by processor 20.

Network interface 30 comprises any suitable combination of hardware and/or software operable to receive information from network 12. For example, network interface 30 may comprise one or more integrated circuits with associated program instructions and logic for receiving information from network 12. Network interface 30 may be further operable to convert between multiple network protocols. For example, network interface 30 may be capable of converting between the Ethernet protocol and the ATM protocol.

Memory 32 comprises electronic, optical, and/or magnetic storage for use with network interface 30. For example, memory 32 may comprise a magnetic hard disk, an optical storage medium, electronic random access memory (RAM), or static RAM (SRAM). In the disclosed embodiment, memory 32 comprises electronic random access memory.

In operation, network interface 30 receives data from network 12 then processes the received data for use by processor 20. For example, network interface 30 may comprise an Ethernet interface for receiving information over the Ethernet network.

FIGURE 2 is a block diagram illustrating details of memory 32. Memory 32 comprises one or more buffers 50. Buffers 50 represent one or more logically discrete portions of memory 32. For example, a buffer 50 may represent one or more pages in memory 32. In one embodiment, buffers 50 represent logically distinct portions of memory 32. Alternatively, buffers 50 may represent overlapping logical portions of memory 32. In addition, buffers 50 may include overlapping physical memory locations. For example, one or more buffers 50 may be mapped onto a particular physical memory address at various times. Buffers 50 may be organized in a particular order, such as a linked list, by network interface 30.

A buffer 50 further comprises a link portion 60, an offset portion 62, a length portion 64, and a data portion 66. Link portion 60 comprises a discrete logical portion of buffer 50 used to order buffers 50 and indicate the next buffer 50 in the order. For example, when buffers 50 are organized as a linked list, link portion 60 may indicate the logical or physical memory address of the next buffer 50 in the linked list.

Offset portion 62 comprises a discrete portion of buffer 50 for indicating an offset into data portion 66. Offset portion 62 may be used to load and retrieve data from data portion 66 that does not start at the beginning of data portion 66. For example, offset portion 62 may indicate the number of bytes from the start of data portion 66 where the data stored in data portion 66 begins.

Length portion 64 comprises a discrete logical portion of buffer 50 used to indicate a length associated with data stored in data portion 66. For example, length portion 64 may be used to determine the end of the data stored in data portion 66. In one embodiment, length portion 64 indicates the size in bytes of data stored in data portion 66.

Data portion 66 comprises a discrete logical portion of buffer 50 operable to store one or more data sets 70. Data portion 66 further comprises a start address 68 and an end address 69. Start address 68 comprises a logical or physical address associated with the start of data portion 66 in buffer 50. For example, data portion 66 may start at hexadecimal address 0x00A0. "0x" is commonly used to indicate that the value following the "0x" is a hexadecimal (base 16 instead of base 10) number. End address 69 comprises a logical or physical address associated with the end of data portion 66 in buffer 50. For example, data portion 66 may end at address 0x1000. It should be noted that the values used in FIGURE 2 for start address 68 and end address 69 are exemplary only and may comprise any suitable values for use with memory 32 and network interface 30.

Data portion 66 is further operable to store one or more data sets 70. A data set 70 comprises a data packet or a portion of a data packet received from network 12 by network interface 30 and stored in memory 32. More specifically, data set 70 comprises an outer header 72, a inner header 74, a payload portion 76, an inner trailer 78 and an outer trailer 80.

Outer header 72 comprises a logical portion of data set 70 which encapsulates inner header 74, payload portion 76 and inner trailer 78. Network protocols, such as the Internet Protocol (IP), Transmission Control Protocol (TCP), Universal Datagram Protocol (UDP), Ethernet, Asynchronous Transfer Mode (ATM) and others, often use encapsulation to allow data encoded using one network protocol to be transported over another network. Network protocols also typically arrange data in packets. The packets typically have a header portion and a payload portion. The header portion includes routing, control and other information associated with the network protocol, while the payload portion includes the data to be transported. For example, Internet Protocol (IP) packets may be encapsulated in the payload portion of an Ethernet packet for transport over an Ethernet network. When the Ethernet packet arrives at a destination, the Ethernet header is stripped off by the Ethernet interface card which exposes the IP header and data in the Ethernet payload portion. For example, outer header 72 may comprise an Internet Protocol header or an Ethernet header.

Inner header 74 comprises a header portion of a data packet encapsulated by outer header 72. Payload 76 comprises a portion of a data packet for storing the data to be transported by the data packet. In contrast to headers, which typically include routing and control information, the payload portion contains the data to be transported. For example, inner header 74 may comprise an Internet Protocol header or an Ethernet header.

Inner trailer 78 comprises control, routing, error correction and/or other information used by the network protocol encapsulated between outer header 72 and outer trailer 80. Not all network protocols utilize the trailer portion 78. For example, trailer portion 78 may be used to include a cyclic redundancy check (CRC) used for detecting errors in data set 70. Outer trailer 80 is associated with outer header 72 and comprises routing, control, error correction, and/or information used by the network protocol encapsulating inner header 74, payload 76 and inner trailer 78.

In operation, network interface 30 receives data from network 12. More specifically, network interface 30 receives one or more data sets 70 having an associated inner header 74, payload 76 and optional inner trailer 78, from network 12. Network interface 30 examines respective received data sets 70 and determines a modification to be performed on the data set 70. For example, network interface 30 may determine that inner header 74 is to be replaced by outer header 72.

For another example, network interface 30 may determine that outer header 72 is to be prepended to the front of inner header 74. Also, network interface 30 may determine that inner header 74 is to be replaced by outer header 72.

Network interface 30 then determines the size of the modifications to be performed. For example, network interface 30 may determine the size in bytes of header 72. Offset portion 62 is then set so that space is left at the beginning of data portion 66 for the modifications. For example, offset portion 62 may be set to be equal to the size of outer header 72. Network interface 30 then stores received data set 70 starting at the location in data portion 66 indicated by offset portion 62 in buffer 50. For example, network interface 30 may add the value in offset portion 62 to start address 68.

Network interface 30 then performs the modification. For example, outer header 72 may be prepended at the beginning of inner header 74. Network interface 30 may then reset offset portion 62 and length portion 64 to account for the new size of data set 70. For example, offset portion 62 may be set to the location in data portion 66 where header 72 starts. This provides the capability of network interface 30 to store data in memory 32 and modify data in memory 32 without copying data between buffers 50. Existing techniques, in contrast, typically include storing inner header 74, payload 76 and inner trailer 78 at start address 68 of data portion 66. Existing techniques would then add outer header 72 to another buffer 50 and then copy inner header 74, payload 76 and inner trailer 78, from one buffer 50 to another buffer 50 such that inner header 74, payload 76 and inner trailer 78 are appended to the end of outer header 72. As network speeds have increased and the volume of data to be handled has increased, network interface 30 has decreased time to perform encapsulation and protocol translation functions. By decreasing the number of memory copies that must be performed, the overhead for processing data set 70 is decreased, and increased performance is realized at network interface 30. For another example, by adding offset portion 62, length portion 64 and start address 68, network interface 30 can quickly determine the end of inner trailer 78 so that outer trailer 80 may be quickly appended to inner trailer 78.

Network interface 30 then communicates the modified data set 70 out over network 12 by simply reading out the data beginning at the location in data portion 66 indicated by offset portion 62. More specifically, by simply adding start address 68 and offset portion 62, network interface 30 can access the start of the modified data set 70. Network interface 30 can then transmit the number of bytes indicated in length portion 64 as length portion 64 indicates the total length of outer header 72, inner header 74, payload 76, inner trailer 78 and outer trailer 80.

## Claims

1. A method for network data processing comprising:
receiving a data set;
determining a modification to perform on the data set;
determining an offset into memory to store the data set based on the modification, the memory having an associated start address;
storing the data set in the memory based on the offset; and
modifying the data set.

2. The method for network data processing according to Claim 1, wherein the data set comprises an Internet Protocol packet.

3. The method for network data processing according to Claim 1, wherein determining the modification comprises:
examining an inner header associated with the data set; and
determining an outer header to associate with the data set.

4. The method for network data processing according to Claim 3 and further comprising:
determining a length associated with the replacement header;
examining an inner trailer associated with the data set; and
determining an outer trailer to associate with the data set.

5. The method for network data processing according to Claim 4, wherein modifying the data set comprises replacing the inner trailer with the outer trailer.

6. The method for network data processing according to Claim 4, wherein modifying the data set comprises associating the outer trailer with the data set based on the start address, the offset and the length.

7. The method for network data processing according to Claim 3, wherein determining the offset comprises:
determining the start address associated with the memory; and
determining the offset based on the start address and the length associated with the outer header.

8. The method for network data processing according to Claim 3, wherein modifying the data set comprises replacing the inner header with the outer header.

9. The method for network data processing according to Claim 3, wherein modifying the data set comprises inserting the outer header between the start address and the offset.

10. The method for network data processing according to Claim 1, wherein storing the data set in the memory comprises:
adding the offset to the start address; and
storing the data set at the result of the addition of the offset and the start address.

11. A system for network data processing comprising:
a network interface having memory and associated logic, the network interface operable to receive a data set and the logic operable to:
determine a modification to perform on the data set;
determine an offset into the memory to store the data set based on the modification, the memory having an associated start address;
store the data set in the memory based on the offset; and
modify the data set.

12. The system for network data processing according to Claim 11, wherein the data set comprises an Internet Protocol packet.

13. The system for network data processing according to Claim 11, wherein the logic is further operable to:
examine an inner header associated with the data set; and
determine an outer header to associate with the data set.

14. The system for network data processing according to Claim 13, wherein the logic is further operable to:
determine a length associated with the replacement header;
examine an inner trailer associated with the data set; and
determine an outer trailer to associate with the data set.

15. The system for network data processing according to Claim 14, wherein the logic is further operable to replace the inner trailer with the outer trailer.

16. The system for network data processing according to Claim 14, wherein the logic is further operable to associate the outer trailer with the data set based on the start address, the offset and the length.

17. The system for network data processing according to Claim 13, wherein the logic is further operable to:
determine the start address associated with the memory; and
determine the offset based on the start address and the length associated with the outer header.

18. The system for network data processing according to Claim 13, wherein the logic is further operable to insert the outer header between the start address and the offset.

19. The system for network data processing according to Claim 11, wherein the logic is further operable to:
add the offset to the start address; and
store the data set at the result of the addition of the offset and the start address.

20. A method for network data processing comprising:
receiving a data set, the data set comprising an inner header and a payload;
determining a modification to perform on the data set;
determining a size associated with an outer header associated with a network protocol;
determining an offset into memory to store the data set based on the size, the memory having an associated start address;
storing the data set in the memory based on the offset and the start address; and
inserting the outer header in the memory at a location between the start address and the sum of the offset and the start address.
